# FASCICULE DE BREVET EUROPEEN

(11) **EP 2 090 021 B1**
(45) Date de publication et mention de la délivrance du brevet: **05.12.2012**
(21) Numéro de dépôt: 07858650.0
(22) Date de dépôt: 23.10.2007
(51) Int. Cl.: H04L 12/24

(54) **PROCEDE DE SUPERVISION D'UNE PLURALITE D'EQUIPEMENTS DANS UN RESEAU DE COMMUNICATION**
VERFAHREN ZUR ÜBERWACHUNG MEHRERER GERÄTE IN EINEM KOMMUNIKATIONSNETZ
METHOD FOR MONITORING A PLURALITY OF EQUIPMENTS IN A COMMUNICATION NETWORK

(30) Priorité: 26.10.2006 FR 0654564
(43) Date de publication de la demande: 19.08.2009
(73) Titulaire: France Télécom, 75015 Paris (FR)
(72) Inventeur: STEPHAN, Emile, 22560 Pleumeur Bodou (FR); COGNET, Yves, 75014 Paris (FR)
(86) Numéro de dépôt international: PCT/FR2007/052231
(87) Numéro de publication internationale: WO 2008/050059

(56) Documents cités:
- WO-A-01/55862
- US-A1- 2004 122 942
- US-B1- 6 359 895

## Description

L'invention concerne une technique de supervision d'une pluralité d'équipements dans un réseau de communication.

On connaît diverses techniques de supervision d'équipements dans un réseau de communication. Généralement, un équipement superviseur est en charge de la supervision d'un nombre limité d'équipements. La mise en place d'une supervision d'un nombre élevé d'équipements terminaux disposés chez des utilisateurs, de l'ordre d'un million, pose un problème de passage à une grande échelle pour un opérateur de réseau de communication, en particulier pour la gestion des alarmes remontant depuis les équipements terminaux vers l'équipement superviseur. En effet, ces équipements terminaux peuvent émettre des alarmes de manière non sollicitée pendant leur fonctionnement. A titre d'exemple illustratif, le document RFC 3164 définit une alarme de type Syslog permettant de notifier à un équipement superviseur un évènement, tel que l'apparition d'un problème. L'alarme décrite dans le document RFC 3164 contient des champs spécifiques, nommés "severity" et "facility", permettant de déduire un niveau de priorité de l'alarme. A la réception d'une alarme prioritaire, l'équipement superviseur peut l'analyser et agir en conséquence. Toutefois, cette méthode de gestion est peu adaptée à un vaste parc d'équipements terminaux. En cas de problème général affectant l'ensemble ou tout du moins une grande partie des équipements du parc, on peut se trouver face à une avalanche d'alarmes difficilement gérable en temps réel par l'équipement superviseur et une alarme prioritaire peut se trouver noyée parmi une avalanche d'alarmes non prioritaires. De plus, l'apparition d'une avalanche d'alarmes non prioritaires peut également nécessiter une analyse rapide de la part de l'opérateur.

Le document WO01/55862 décrit un procédé d'analyse de données temps réel mis en oeuvre de façon hiérarchisée et distribuée dans un réseau.

Il existe donc un besoin d'une technique permettant à un équipement superviseur d'identifier dans un flot d'alarmes une alarme remontant un problème rencontré par un équipement terminal, voire quelques équipements terminaux.

L'invention répond à ce besoin en proposant un procédé de supervision d'une pluralité d'équipements dans un réseau de communication. Le procédé comprend :
- une étape de réception de notifications d'informations en provenance d'une pluralité d'équipements par un premier dispositif superviseur, une notification d'informations en provenance d'un équipement comprenant une pluralité de champs d'informations ;
- une étape de génération d'au moins une empreinte par notification d'informations reçue, l'empreinte étant composée de codes extraits de champs prédéterminés de ladite notification ;
- une étape de dénombrement du nombre d'occurrences d'au moins une empreinte;
- une étape de notification à au moins un dispositif superviseur maître d'au moins une empreinte et du nombre d'occurrences dénombré pour cette empreinte.

Un premier dispositif superviseur reçoit des notifications d'informations comprenant une pluralité de champs d'information d'une pluralité d'équipements. Ces équipements peuvent être des passerelles d'utilisateur gérant elles-mêmes d'autres équipements, des équipements terminaux et des robots agencés pour effectuer des mesures sur requête d'un utilisateur ou d'un autre équipement. A partir de ces notifications, le procédé élabore au vol, c'est-à-dire en temps réel, une empreinte des notifications reçues et dénombre le nombre d'occurrences de l'empreinte. Ainsi, le dispositif superviseur maître reçoit d'au moins un premier dispositif superviseur une vue synthétique, à partir des empreintes générées et du nombre d'occurrences dénombrées, permettant d'avoir une vue d'ensemble, par exemple sur une zone géographique ou pour un ensemble d'équipements de même préfixe d'adresse IP ou pour un service donné ou pour un même type d'anomalie, tout en gardant une visibilité sur des informations prioritaires liées à un ou des équipements terminaux.

On notera que l'invention tire son origine d'un problème d'identification dans un flot d'alarmes d'une alarme remontant un problème rencontré par un équipement terminal dans un réseau de communication. Toutefois, l'invention s'applique également à d'autres types de notifications de supervision telles que des informations de configuration, d'identification, de facturation, de localisation, des statistiques, des mesures, des comptages et permet de fournir au dispositif superviseur maître des vues synthétiques de ces notifications.

Avantageusement, le procédé comprend en outre une étape de détermination des champs de la notification à partir desquels une empreinte est générée en fonction d'une cadence d'arrivée des notifications au premier dispositif superviseur.

En fonction de la cadence d'arrivée des notifications en provenance des équipements, le premier dispositif superviseur adapte la profondeur de l'empreinte et donc de la vue synthétique qu'il élabore afin d'éviter de surcharger le dispositif superviseur maître. On préserve également du temps processeur du premier dispositif superviseur, ce dernier générant une empreinte à partir d'un nombre moins important de champs des notifications.

De plus, dans le cas où on reçoit au moins en provenance d'un équipement une notification, composée de tickets d'informations chaînés, on génère une empreinte à partir de champs de l'ensemble desdits tickets.

Les notifications peuvent se présenter sous la forme d'une chaîne de tickets contenant des informations de plus en plus détaillées. Ils se composent dans ce cas d'un ticket maître auquel est chaîné un ticket secondaire. Ce dernier peut également pointer sur un autre ticket. L'empreinte est alors générée à partir des champs prédéterminés de l'ensemble de cette chaîne de tickets.

En outre, le procédé comprend une étape de régulation des notifications avant l'exécution de l'étape de génération d'une empreinte, ladite étape de régulation consistant à supprimer des tickets de la chaîne en fonction d'un taux de charge du premier dispositif superviseur.

Ainsi, en cas de surcharge, la régulation est effectuée dès la réception de la notification par suppression de tickets détaillés et avant la génération d'une empreinte.

Avantageusement, le procédé comprend une étape de mémorisation par le premier superviseur des notifications d'informations reçues et une étape d'envoi d'informations mémorisées suite à une demande du dispositif superviseur maître, ladite demande étant effectuée suite à une notification.

Suite à la réception d'une notification d'une empreinte et du nombre d'occurrences dénombré pour cette empreinte ou pour une raison propre à l'exploitation du réseau, le dispositif superviseur maître peut demander au premier dispositif superviseur de recevoir des informations détaillées. Il décide ainsi des informations détaillées qu'il souhaite recevoir.

De plus, le procédé comprend lors de l'étape de mémorisation des notifications reçues, une agrégation de ces notifications par le premier dispositif superviseur selon un taux d'agrégation, le taux d'agrégation dépendant également de la cadence d'arrivée des notifications au premier dispositif superviseur.

Le premier dispositif superviseur mémorise les notifications reçues et peut les agréger en fonction d'un taux d'agrégation dont la valeur dépend également de la cadence d'arrivée des informations. Ainsi, en période de surcharge, on préserve de la capacité mémoire ainsi que du temps processeur du premier dispositif maître.

En outre, le procédé comprend en outre après l'étape de réception des notifications, une étape de tri des notifications en fonction d'un type contenu dans un champ et dans lequel l'étape de dénombrement d'au moins une empreinte est effectuée sur les empreintes générées à partir des notifications triées par type, afin de générer une vue par type.

L'étape de tri par type de notifications d'informations, réalisée avant l'étape de génération d'une empreinte, permet de simplifier l'étape de dénombrement des occurrences d'une empreinte, cette étape s'effectuant sur des empreintes « spécialisées » et permet d'élaborer des vues synthétiques par type.

L'invention concerne également un dispositif superviseur, agencé pour superviser une pluralité d'équipements dans un réseau de communication.

Le dispositif comprend :
- des moyens de réception de notifications d'informations, agencés pour recevoir des notifications en provenance d'une pluralité d'équipements, une notification d'informations en provenance d'un équipement comprenant une pluralité de champs d'information :
- des moyens de génération d'au moins une empreinte, agencés pour générer au moins une empreinte par notification reçue, ladite empreinte étant composée de codes extraits de champs prédéterminés de ladite notification ;
- des moyens de dénombrement du nombre d'occurrences d'une empreinte, agencés pour dénombrer le nombre d'occurrences d'une empreinte ;
- des moyens de notification à au moins un dispositif superviseur maître d'au moins une empreinte et du nombre d'occurrences dénombré pour cette empreinte.

L'invention concerne également un système de supervision, agencé pour superviser une pluralité d'équipements dans un réseau de communication.

Le système comprend :
- au moins un dispositif superviseur tel que décrit ci-dessus;
- au moins un dispositif superviseur maître, comprenant des moyens de réception d'une notification comprenant au moins une empreinte et un nombre d'occurrences dénombré pour cette empreinte.

L'invention sera mieux comprise à l'aide de la description suivante d'un mode de réalisation particulier du procédé de l'invention, en référence aux dessins annexés sur lesquels :
- la figure 1 représente un système de supervision dans un réseau de communication ;
- la figure 2 représente les étapes du procédé selon un mode particulier de réalisation de l'invention ;
- la figure 3 représente un dispositif superviseur selon l'invention.

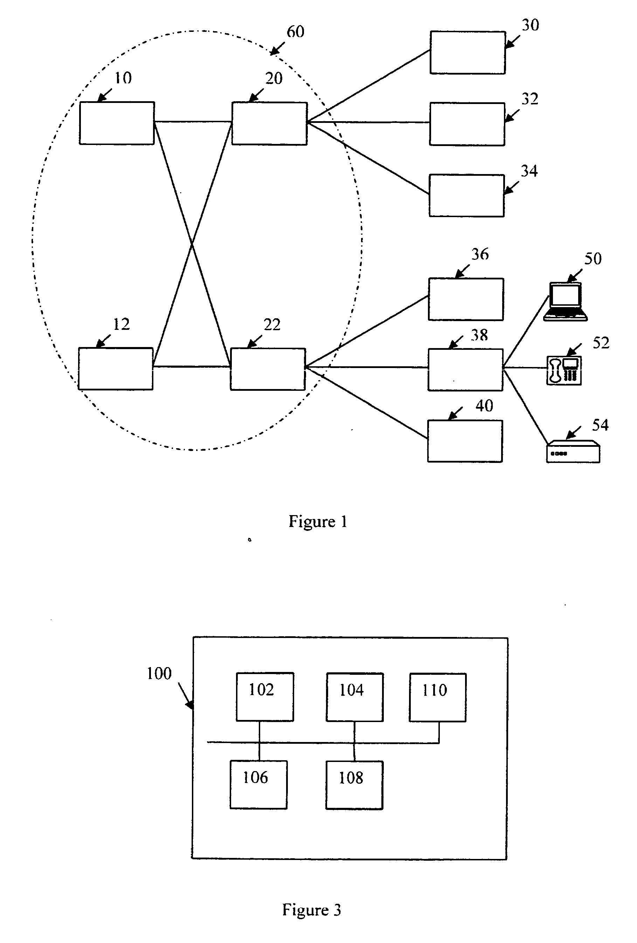

On a représenté sur la figure 1 un système 60 de supervision dans un réseau de communication. Le système est composé d'au moins un dispositif superviseur maître et d'au moins un dispositif superviseur de premier niveau. Deux dispositifs superviseurs maîtres 10, 12 et deux dispositifs superviseurs de premier niveau 20, 22 sont représentés sur la figure 1. A ces derniers, sont connectés des équipements terminaux de différents types. Il peut s'agir d'équipements 38 d'entrée du site d'un client, tels qu'une passerelle d'utilisateur, un routeur d'une petite entreprise. A cet équipement 38 d'entrée du site d'un client sont connectés des équipements du client 50, 52, 54 tels qu'un téléphone de voix sur IP, un ordinateur, des équipements domotiques.

Il peut également s'agir d'équipements terminaux grand public 30, 32, 34, 36.

Optionnellement, s'il est possible dans le réseau de communication d'initier des mesures à partir d'un équipement terminal, un équipement 40 de type robot est connecté au dispositif superviseur de premier niveau.

L'équipement 38 d'entrée de site peut suivant les cas relayer des notifications d'informations émises par les équipements terminaux 50, 52, 54 qui lui sont connectés ou générer lui-même des notifications d'informations à partir d'informations qu'il a collectées par tout moyen.

Par la suite, l'ensemble de ces équipements susceptibles d'envoyer des notifications d'informations à un dispositif superviseur de premier niveau sont appelés équipements terminaux.

L'ensemble des équipements terminaux 36, 38, 40 envoie au dispositif de collecte 22 des notifications d'informations de différents types. Il peut s'agir, par exemple, de notifications de surveillance, de configuration, de mesure, de comptage et d'authentification.

Les notifications d'informations sont émises par exemple en utilisant différents formats tels que Syslog pour les notifications de surveillance, SNMP (pour "Simple Network Management Protocol") pour les notifications de configuration, IPFIX (pour "IP Flow Information Export") pour les notifications de comptage, ...

Dans un mode particulier de réalisation, les notifications d'informations sont codées dans des tickets d'informations selon le protocole IPFIX, tel que défini dans le cadre de l'IETF (pour "Internet Engineering Task Force"), c'est-à-dire que chaque ticket d'informations est encodé selon un patron défini au préalable. Le patron définit un modèle de format de champs d'information consécutifs. Un ticket d'information se présente donc sous la forme d'un identifiant de patron et d'un ensemble de codes correspondant à des champs desdits tickets.

Pour la suite de la description, on se place dans ce mode particulier de réalisation.

On connaît des patrons normalisés permettant à un équipement d'un réseau de communication de remonter vers un dispositif de collecte des tickets d'informations de comptage liés à des flots IP. L'équipement du réseau effectue un comptage relatif à des flots IP le traversant et collecte des informations pertinentes, puis celles-ci sont envoyées de façon structurée en fonction du patron vers un dispositif de collecte. Chaque ticket contient des champs d'informations d'identification du flot, basées principalement sur l'entête de la trame IP (le couple d'adresses IP source et destination, le protocole de niveau 4 ainsi que les ports utilisés, le champ TOS pour « Type Of Service ») et des champs d'informations de comptage (volumétrie en trames et octets).

Selon l'invention, on définit de nouveaux patrons spécifiant les champs d'informations présents dans les tickets d'information transmis, permettant à un équipement terminal de remonter des informations de supervision à un dispositif superviseur :
- un premier patron de type "GeneralContext" permettant de notifier des informations de configuration telles qu'une description des équipements connectés, leur marque, leur version logicielle,...
- un deuxième patron de type "AtomicMonitoringAlarm" permettant de notifier des informations de surveillance telles qu'un type d'évènement, une catégorie d'information de supervision, une description fine de l'information de surveillance,...

Les deux patrons comprennent un champ d'information correspondant à un identifiant de la source du ticket. On peut par exemple choisir l'adresse IP de l'émetteur du ticket.

Les notifications de surveillance susceptibles d'être remontées à un équipement superviseur sont relatives à différents types d'informations, par exemple, alarmes, mesures, authentification, facturation, identification, facturation, localisation, ... Dans le mode particulier de réalisation tel que décrit ici, ces différents types d'information sont transmis selon un même patron. Il est naturellement possible de définir autant de patrons qu'il y a de types d'informations à transmettre.

A titre d'exemple, la catégorie d'information de supervision peut être:
- une anomalie,
- une indication,
- une information de localisation,
- une information relative à des mesures caractérisant la performance ou la qualité,
- une information de configuration,
- des statistiques,...

Toujours à titre d'exemple, le type d'évènement peut être:
- système,
- système d'exploitation,
- un type de service: service Voix sur IP (VoIP), service Télévision, service Vidéo On demand",
- facturation,
- mesure d'autotest,
- des informations d'authentification par exemple de type AAA (pour « Authentification Authorization Accounting»)...

Dans une variante, on peut définir une pluralité de patrons permettant de transmettre une notification d'informations en une chaîne de tickets. Le ticket maître contient une référence à un autre ticket. Le ticket secondaire permet d'avoir une vue plus détaillée par rapport au ticket auquel il est chaîné. Plus on descend dans la hiérarchie des tickets, plus l'information est précise. On comprendra que le ticket maître et les tickets secondaires chaînés peuvent être reçus successivement dans le temps.

Par exemple, le premier patron "GeneralContext" tel que défini ci-dessus comprend les champs d'information nécessaires pour une identification des équipements et un patron secondaire permet de préciser les équipements.

Le deuxième patron "AtomicMonitoringAlarm" tel que défini ci-dessus contient outre les informations (type d'évènement, catégorie d'information de supervision), un numéro séquentiel d'évènement EventID ainsi qu'un lien vers un patron secondaire qui permet de décrire plus finement l'information de surveillance. On peut ainsi définir autant de niveaux chaînés qu'il est nécessaire pour une description complète de l'information.

Il permet de transmettre les différents types d'informations tels que des alarmes, des mesures, des informations d'authentification, de facturation, d'identification, de localisation.

Dans cette variante, on peut donc recevoir en provenance d'un équipement pour un évènement particulier une notification d'informations composée de plusieurs tickets d'informations, comprenant un ticket maître et au moins un ticket secondaire chaîné.

Par la suite, on considère que l'expression «notification» couvre l'ensemble des champs liés à un évènement particulier signalé par un équipement, que les champs d'informations aient été reçus dans un seul ticket d'informations ou bien selon la variante, dans une chaîne de tickets d'information.

De plus, on appelle empreinte d'une notification le résultat obtenu à l'issue d'une extraction d'un nombre de champs prédéterminés d'une notification. Une empreinte peut être plus ou moins profonde en fonction du nombre de champs prédéterminés extraits.

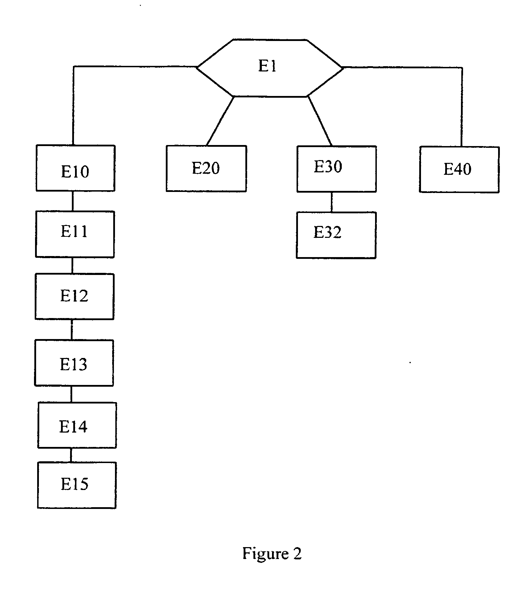

Le procédé de supervision d'une pluralité d'équipements dans un réseau de communication va maintenant être décrit en relation avec la figure 2.

Dans une étape préalable, non représentée sur la figure 2, le dispositif 20, 22 superviseur de premier niveau reçoit des paramètres de configuration en provenance d'un dispositif 10, 12 superviseur maître. Ces paramètres de configuration permettent de définir par exemple des seuils qui sont utilisés par la suite pour déterminer des champs à partir desquels l'empreinte est générée et un taux d'agrégation et de déclencher ainsi des mécanismes de protection tels que par exemple, une régulation de l'envoi des notifications au dispositif superviseur maître. En fonctionnement, le dispositif superviseur maître peut également modifier ces seuils et envoyer au dispositif superviseur de premier niveau de nouveaux seuils.

De façon optionnelle, le dispositif 20, 22 superviseur de premier niveau détermine par observation des notifications d'informations par exemple les seuils utilisés par la suite pour déterminer les champs à partir desquels l'empreinte est générée et un taux d'agrégation. En fonctionnement, il peut également ajuster ces seuils.

Le dispositif superviseur maître peut également demander au dispositif superviseur de premier niveau de remonter uniquement une vue synthétique liée à un service, à un type d'informations de supervision, à un type d'évènement, à une zone géographique, pour un ensemble d'équipements de même préfixe d'adresse IP,...

Le dispositif superviseur de premier niveau est en attente d'un évènement. Lors d'une étape E1 de test, on teste le type d'évènement.

Si l'évènement est la réception d'une notification d'informations en provenance d'un équipement terminal 36, dans une étape E12 de génération d'empreintes, le dispositif superviseur de premier niveau génère une empreinte correspondant à la notification reçue. On notera que les critères d'émission de notifications d'information sont propres aux équipements terminaux et ne sont pas plus détaillés dans ce document. L'empreinte est composée de codes extraits de champs d'informations prédéterminés de la notification. A titre d'exemple, un ticket d'informations reçu de l'équipement terminal d'adresse IP 139.100.34.1 :

| | |
|---|---|
| Set ID = 511 ("AtomicMonitoringTemplate") | Longueur |
| 139.100.34.1 (MonitoringFlowID) | |
| 1 (Type "système") | 1 (Catégorie "Anomalie") |
| 502 (chaînage vers autre ticket) | 9003 (EventID) |

correspond à la suite suivante de codes (511, 139.100.34.1, 1, 1, 502, 9003). Pour un paramétrage tel qu'on génère l'empreinte à partir de codes extraits des champs d'information suivants (Set ID, Type d'évènement, Catégorie d'information de supervision), l'empreinte générée est (511, 1, 1). En fonction du nombre de champs prédéterminés, le dispositif superviseur de premier niveau réalise une empreinte plus ou moins profonde par la prise en compte de différents champs d'informations avec, dans la variante de réalisation, des champs d'information contenus dans des tickets d'information chaînés. Ainsi, en cas de surcharge, il ne prend pas en compte, dans la variante, des tickets secondaires chaînés.

Puis, dans une étape E13 de dénombrement, le dispositif superviseur de premier niveau met à jour au vol, c'est-à-dire en temps réel, le nombre d'occurrences de l'empreinte déterminée à l'étape E12. Cette étape peut être réalisée à l'aide d'algorithmes de recherche rapide dans des arbres de codage, une feuille de l'arbre contenant le nombre d'occurrences. Ainsi, dans l'exemple ci-dessus, le nombre d'occurrences de la feuille de l'arbre (511, 1, 1) est incrémenté de un.

Dans une étape E15 de mémorisation, le dispositif superviseur de premier niveau mémorise la notification d'informations reçue dans une table 110, telle que représentée sur la figure 3. Cette table 110 peut contenir les notifications d'information telles que reçues. Une seule table est représentée ; il peut toutefois y en avoir une pluralité en fonction du type des notifications. Dans ce cas, il existe une table des contextes pour les notifications de configuration, une table de surveillance pour les notifications de surveillance, une table de comptage pour les notifications de comptage, une table de mesure pour les notifications de mesure, etc....Dans un autre mode particulier de réalisation, le dispositif superviseur de premier niveau effectue, avant l'étape E15 de mémorisation, une étape E14 d'agrégation des notifications selon un taux d'agrégation. A titre d'exemple, on connaît déjà, dans le document accessible à l'adresse suivante http://tools.ietf.org/wg/ipfix/draft-dressler-ipfix-aggregation-03.txt, de telles tables pour les tickets d'information de comptage. En fonction du type de la notification et du taux d'agrégation, le dispositif superviseur de premier niveau met à jour dans la table 110 correspondant au type de la notification, les champs correspondant à l'information agrégée. En fonction du taux d'agrégation, les notifications sont agrégées pour un équipement terminal, pour un ensemble d'équipements terminaux ou pour un sous réseau selon une certaine profondeur. A titre d'exemple, la table 110 d'agrégation des contextes contient les éléments suivants: identifiant d'agrégation, description d'un équipement, marque, version logicielle, instant du premier ticket reçu, instant du dernier ticket reçu.

Toujours à titre d'exemple, la table 110 d'agrégation de la surveillance contient les éléments suivants: identifiant d'agrégation, type, catégorie, patron du ticket chaîné, numéro d'évènement, instant du premier ticket reçu, instant du dernier ticket reçu, nombre de tickets maîtres, nombre de tickets secondaires, ....

Le dispositif superviseur de premier niveau attend ensuite un nouvel évènement.

Si l'évènement est un évènement interne signalant que la cadence d'arrivée des notifications d'informations en provenance d'un équipement terminal a franchi un seuil, le dispositif superviseur de premier niveau détermine alors, dans une étape E20 de détermination, les champs de la notification à partir desquels l'empreinte est générée et le taux d'agrégation à utiliser par la suite en fonction d'une cadence d'arrivée des tickets d'informations. Le dispositif superviseur change de mode de fonctionnement, par exemple d'un mode dit "normal" à un mode dit "saturé", en fonction de la cadence d'arrivée des notifications d'informations. On note ainsi qu'en cas d'augmentation soudaine de la cadence d'arrivée en provenance d'un ou de plusieurs équipements terminaux, le nombre de champs de la notification à partir desquels l'empreinte est générée et le taux d'agrégation vont diminuer. Ainsi, la vue synthétique fournie au dispositif superviseur maître est moins détaillée. Les informations mémorisées dans les tables d'agrégation sont également moins précises. Par exemple, en fonction du taux d'agrégation, dans la variante, le dispositif superviseur de premier niveau ne traite pas les tickets secondaires chaînés. Les capacités mémoire et de temps de calcul du dispositif superviseur de premier niveau sont donc préservées. Le dispositif superviseur maître dispose, quant à lui, d'une vue synthétique adaptée et ne se trouve pas submergé par une avalanche de notifications. Il peut également notifier le dispositif superviseur maître du fait qu'il a franchi un seuil.

Le dispositif superviseur de premier niveau attend ensuite un nouvel évènement.

Si l'évènement est la détection qu'une temporisation d'envoi des vues synthétiques a expiré, il envoie alors dans une étape E30 de notification à un dispositif superviseur maître 10, 12 une notification d'empreinte comprenant au moins une empreinte et le nombre d'occurrences dénombré pour cette empreinte. Une vue synthétique est composée d'une pluralité de notifications d'empreinte.

A titre d'exemple, si un problème affecte l'ensemble des équipements terminaux mettant en oeuvre un service de Voix sur IP, on obtient pour un nombre de champs à partir desquels l'empreinte est généré égal à trois, une empreinte (511, 1, 4) pour "anomalie" et "VoIP" et un nombre d'occurrences à 500. On suppose qu'on a également l'empreinte (511, 1, 1), pour une anomalie de type système et un nombre d'occurrences égal à un. Le dispositif superviseur de premier niveau remonte donc au dispositif superviseur maître une vue synthétique composée des notifications d'empreinte : (511, 1, 1, 1) et (511, 1, 4, 500). La vue synthétique permet au dispositif superviseur maître de prendre connaissance d'une occurrence importante d'un problème affectant un grand nombre d'équipements terminaux Voix sur IP et également d'un problème isolé d'anomalie de type système. Cela permet ainsi de détecter et de regrouper des flots d'information les plus actifs afin de transmettre en temps réel aux applications de supervision du réseau des informations regroupées pertinentes.

Le dispositif superviseur de premier niveau attend ensuite un nouvel évènement.

Si l'évènement correspond à une demande du dispositif superviseur maître de fourniture d'informations détaillées, il effectue alors une étape de sélection des informations détaillées demandées par lecture des tables 110 mémorisant les notifications d'informations et dans une étape E40 d'envoi, il envoie les informations sélectionnées au dispositif superviseur maître.

Le dispositif superviseur de premier niveau attend ensuite un nouvel évènement.

Optionnellement et dans la variante, le procédé comprend une étape E10 de régulation des notifications d'informations avant l'exécution de l'étape E12 de génération d'une empreinte. L'étape de régulation consiste à supprimer des tickets de la chaîne en fonction d'un taux de charge du dispositif superviseur de premier niveau. Ainsi avant même l'étape de génération d'une empreinte, on peut supprimer un ou plusieurs niveaux de chaînage des tickets, l'empreinte étant générée par exemple à partir de codes extraits de champs du niveau maître en cas de forte charge.

Optionnellement, le procédé comprend en outre après l'étape de réception des notifications d'informations, une étape E11 de tri des notifications en fonction d'un type contenu dans un champ. L'étape E13 de dénombrement d'au moins une empreinte est effectuée sur les empreintes générées à partir des notifications triées par type. On obtient alors une vue synthétique par type d'informations en fonction des empreintes générées pour chaque type. Par exemple, on peut avoir une première vue synthétique issue du traitement des tickets d'informations « GeneralContext » et une deuxième vue synthétique issue du traitement des tickets d'informations « AtomicMonitoring ». A partir de ces derniers tickets, on peut également générer des vues synthétiques plus détaillées.

Dans le cas où des dispositifs superviseurs maîtres sont spécialisés pour un type de supervision, on peut, par exemple, envoyer les vues synthétiques de notifications d'informations à des dispositifs maîtres en fonction du type : une vue synthétique de comptage à un premier dispositif superviseur maître 10, les vues synthétiques de configuration et de surveillance à un deuxième dispositif superviseur maître 12 et une vue synthétique de mesure à un troisième dispositif superviseur non représenté sur la figure 1.

On va maintenant décrire un dispositif 100 superviseur de premier niveau, agencé pour superviser une pluralité d'équipements dans un réseau de communication, en référence à la figure 3.

En référence à la figure 3, le dispositif 100 superviseur de premier niveau comprend:
- des moyens 102 de réception de notifications d'informations, agencés pour recevoir des notifications en provenance d'une pluralité d'équipements, une notification en provenance d'un équipement comprenant une pluralité de champs d'informations ;
- des moyens 104 de génération d'au moins une empreinte, agencés pour générer au moins une empreinte par notification reçue, ladite empreinte étant composée de codes extraits de champs prédéterminés de ladite notification ;
- des moyens 106 de dénombrement du nombre d'occurrences d'une empreinte, agencés pour dénombrer le nombre d'occurrences d'une empreinte ;
- des moyens 108 de notification à un dispositif superviseur maître d'au moins une empreinte et du nombre d'occurrences dénombré pour cette empreinte.

Optionnellement, le dispositif superviseur 100 comprend également au moins une table 110 de notifications, agencée pour mémoriser des informations détaillées ou agrégées.

Les modules 102, 104, 106, 108 qui mettent en oeuvre le procédé précédemment décrit, sont de préférence des modules logiciels comprenant des instructions logicielles pour faire exécuter les étapes du procédé précédemment décrit par le dispositif 100 superviseur de premier niveau.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de supervision 60, agencé pour superviser une pluralité d'équipements dans un réseau de communication comprenant au moins un dispositif 100 superviseur tel que décrit ci-dessus et au moins un dispositif 10, 12 superviseur maître, comprenant des moyens de réception d'une notification comprenant au moins une empreinte et un nombre d'occurrences dénombré pour cette empreinte.

Le procédé est décrit dans un mode particulier de réalisation permettant de remonter des notifications d'informations selon le protocole IPFIX. Il est aisément applicable à la supervision d'équipements terminaux remontant des informations selon tout type de codage, des codages hétérogènes, tels que Syslog, SNMP, pouvant être utilisés pour les différents types de notifications de supervision.

La description est faite dans le cadre d'un réseau de communication par paquets de type IP. L'invention s'applique également à tout type de réseau de communication.

## Revendications

1. Procédé de supervision d'une pluralité d'équipements dans un réseau de communication, comprenant :
- une étape de réception de notifications d'informations en provenance d'une pluralité d'équipements par un premier dispositif superviseur (20, 22), une notification d'informations en provenance d'un équipement comprenant une pluralité de champs d'informations ;
- une étape (E12) d'extraction d'un ensemble de codes de champs prédéterminés d'une notification d'informations reçue, l'ensemble de codes extraits formant une empreinte de ladite notification ;
- une étape (E13) de dénombrement du nombre d'occurrences d'au moins une empreinte ;
- une étape (E30) de notification à au moins un dispositif superviseur maître (10, 12) d'au moins une empreinte et du nombre d'occurrences dénombré pour cette empreinte ; **caractérisé en ce que** ledit procédé comprend en outre une étape (E20) de détermination des champs de la notification à extraire pour former l'empreinte en fonction d'une cadence d'arrivée des notifications au premier dispositif superviseur.

2. Procédé selon la revendication 1, dans lequel on reçoit au moins en provenance d'un équipement une notification, composée de tickets d'informations chaînés, et les codes extraits appartiennent aux champs de l'ensemble desdits tickets.

3. Procédé selon la revendication 2, comprenant en outre une étape (E10) de régulation des notifications avant l'exécution de l'étape (E12) d'extraction d'un ensemble de codes, ladite étape de régulation consistant à supprimer des tickets de la chaîne en fonction d'un taux de charge du premier dispositif superviseur.

4. Procédé selon l'une quelconque des revendications précédentes, comprenant en outre une étape (E15) de mémorisation par le premier superviseur des notifications, d'informations reçues et une étape (E40) d'envoi d'informations mémorisées suite à une demande (E4) du dispositif superviseur maître, ladite demande étant effectuée suite à une notification.

5. Procédé selon la revendication 4, comprenant lors de l'étape de mémorisation des notifications reçues, une agrégation (E14) desdites notifications par le premier dispositif superviseur selon un taux d'agrégation, le taux d'agrégation dépendant également de la cadence d'arrivée des notifications au premier dispositif superviseur.

6. Procédé selon l'une quelconque des revendications précédentes, comprenant en outre après l'étape de réception des notifications, une étape (E11) de tri des notifications en fonction d'un type contenu dans un champ et dans lequel l'étape (E13) de dénombrement d'au moins une empreinte est effectuée sur les empreintes générées à partir des notifications triées par type, afin de générer une vue par type.

7. Dispositif superviseur (100), agencé pour superviser une pluralité d'équipements dans un réseau de communication, comprenant :
- des moyens (102) de réception de notifications d'informations, agencés pour recevoir des notifications en provenance d'une pluralité d'équipements, une notification d'informations en provenance d'un équipement comprenant une pluralité de champs d'information :
- des moyens (104) de génération d'au moins une empreinte, agencés pour extraire un ensemble de codes de champs prédéterminés d'une notification reçue, l'ensemble de codes extraits formant une empreinte de ladite notification ;
- des moyens (106) de dénombrement du nombre d'occurrences d'une empreinte, agencés pour dénombrer le nombre d'occurrences d'une empreinte ;
- des moyens (108) de notification à au moins un dispositif superviseur maître d'au moins une empreinte et du nombre d'occurrences dénombré pour cette empreinte ;
**caractérisé en ce qu'**il comprend en outre des moyens de détermination des champs de la notification à extraire pour former l'empreinte en fonction d'une cadence d'arrivée des notifications au premier dispositif superviseur.

8. Système de supervision (60), agencé pour superviser une pluralité d'équipements dans un réseau de communication, comprenant :
- au moins un dispositif (100) superviseur selon la revendication 7 ;
- au moins un dispositif (10, 12) superviseur maître, comprenant des moyens de réception d'une notification comprenant au moins une empreinte et un nombre d'occurrences dénombré pour cette empreinte.

9. Programme pour superviser une pluralité d'équipements dans un réseau de communication, pour un dispositif (20, 22) superviseur, comprenant des instructions de programme destinées à commander l'exécution des étapes du procédé selon l'une quelconque des revendications 1 à 6 lorsque ledit programme est exécuté par le dispositif superviseur.

10. Support d'enregistrement lisible par un dispositif superviseur sur lequel est enregistré le programme selon la revendication 9.

## Claims

1. Method for supervising a plurality of items of equipment in a communication network, comprising:
- a step of receiving information notifications originating from a plurality of items of equipment by a first supervisor device (20, 22), an information notification originating from an item of equipment comprising a plurality of information fields;
- a step (E12) of extracting a set of codes of predetermined fields of an information notification received, said set of extracted codes forming an imprint of said notification;
- a step (E13) of enumerating the number of occurrences of at least one imprint;
- a step (E30) of notifying at least one master supervisor device (10, 12) of at least one imprint and of the number of occurrences enumerated for this imprint;
**characterized in that** said method furthermore comprises a step (E20) of determining the fields of the notification to be extracted so as to form the imprint as a function of a rate of arrival of the notifications at the first supervisor device.

2. Method according to Claim 1, in which a notification, composed of chained information tickets, is received at least originating from an item of equipment, and the codes extracted belong to the fields of the set of said tickets.

3. Method according to Claim 2, furthermore comprising a step (E10) of regulating the notifications before the execution of the step (E12) of extracting a set of codes, said regulating step consisting in deleting tickets of the chain as a function of a degree of loading of the first supervisor device.

4. Method according to any one of the preceding claims, furthermore comprising a step (E15) of storage by the first supervisor of the information notifications received and a step (E40) of dispatching items of information stored subsequent to a request (E4) of the master supervisor device, said request being performed subsequent to a notification.

5. Method according to Claim 4, comprising during the step of storing the notifications received, an aggregation (E14) of said notifications by the first supervisor device according to a degree of aggregation, the degree of aggregation depending also on the rate of arrival of the notifications at the first supervisor device.

6. Method according to any one of the preceding claims, furthermore comprising after the step of receiving the notifications, a step (E11) of sorting the notifications as a function of a type contained in a field and in which the step (E13) of enumerating at least one imprint is performed on the imprints generated on the basis of the notifications sorted by type, so as to generate a view by type.

7. Supervisor device (100), designed to supervise a plurality of items of equipment in a communication network, comprising:
- means (102) for receiving information notifications, designed to receive notifications originating from a plurality of items of equipment, an information notification originating from an item of equipment comprising a plurality of information fields:
- means (104) for generating at least one imprint, designed to extract a set of codes of predetermined fields of a notification received, the set of codes extracted forming an imprint of said notification;
- means (106) for enumerating the number of occurrences of an imprint, designed to enumerate the number of occurrences of an imprint;
- means (108) for notifying at least one master supervisor device of at least one imprint and of the number of occurrences enumerated for this imprint; **characterized in that** it furthermore comprises means for determining the fields of the notification to be extracted so as to form the imprint as a function of a rate of arrival of the notifications at the first supervisor device.

8. Supervision system (60), designed to supervise a plurality of items of equipment in a communication network, comprising:
- at least one supervisor device (100) according to Claim 7;
- at least one master supervisor device (10, 12), comprising means for receiving a notification comprising at least one imprint and a number of occurrences enumerated for this imprint.

9. Program for supervising a plurality of items of equipment in a communication network, for a supervisor device (20, 22), comprising program instructions intended to control the execution of the steps of the method according to any one of Claims 1 to 6 when said program is executed by the supervisor device.

10. Recording medium readable by a supervisor device on which the program according to Claim 9 is recorded.

## Patentansprüche

1. Verfahren zur Überwachung einer Vielzahl von Ausrüstungen in einem Kommunikationsnetz, das enthält:
- einen Schritt des Empfangs von von einer Vielzahl von Ausrüstungen kommenden Informationsmitteilungen durch eine erste Überwachungsvorrichtung (20, 22), wobei eine von einer Ausrüstung kommende Informationsmitteilung eine Vielzahl von Informationsfeldern enthält;
- einen Schritt (E12) der Entnahme einer Einheit von vorbestimmten Feldcodes aus einer empfangenen Informationsmitteilung, wobei die Einheit von entnommenen Codes einen Abdruck der Mitteilung formt;
- einen Schritt (E13) der Zählung der Anzahl von Vorkommen mindestens eines Abdrucks;
- einen Schritt (E30) der Mitteilung an mindestens eine Hauptüberwachungsvorrichtung (10, 12) mindestens eines Abdrucks und der Anzahl von Vorkommen, die für diesen Abdruck gezählt wurde;
**dadurch gekennzeichnet, dass** das Verfahren außerdem einen Schritt (E20) der Bestimmung der Felder der Mitteilung enthält, die zu entnehmen sind, um den Abdruck zu formen, abhängig von einem Ankunftstakt der Mitteilungen an der ersten Überwachungsvorrichtung.

2. Verfahren nach Anspruch 1, bei dem mindestens von einer Ausrüstung eine Mitteilung empfangen wird, die aus verketteten Informationstickets besteht, und die entnommenen Codes zu den Feldern der Einheit der Tickets gehören.

3. Verfahren nach Anspruch 2, das außerdem einen Schritt (E10) der Regelung der Mitteilungen vor der Ausführung des Schritts (E12) der Entnahme einer Einheit von Codes enthält, wobei der Regelungsschritt darin besteht, abhängig von einer Belastungsrate der ersten Überwachungsvorrichtung Tickets aus der Kette zu entfernen.

4. Verfahren nach einem der vorhergehenden Ansprüche, das außerdem einen Schritt (E15) der Speicherung durch den ersten Überwacher der empfangenen Informationsmitteilungen und einen Schritt (E40) des Sendens von gespeicherten Informationen nach einer Anforderung (E4) der Hauptüberwachungsvorrichtung enthält, wobei die Anforderung nach einer Mitteilung durchgeführt wird.

5. Verfahren nach Anspruch 4, das im Speicherschritt der empfangenen Mitteilungen eine Aggregation (E14) der Mitteilungen durch die erste Überwachungsvorrichtung gemäß einer Aggregationsrate enthält, wobei die Aggregationsrate ebenfalls vom Ankunftstakt der Mitteilungen an der ersten Überwachungsvorrichtung abhängt.

6. Verfahren nach einem der vorhergehenden Ansprüche, das außerdem nach dem Schritt des Empfangs der Mitteilungen einen Schritt (E11) des Sortierens der Mitteilungen abhängig von einem in einem Feld enthaltenen Typ enthält, und bei dem der Schritt (E13) der Zählung mindestens eines Abdrucks an den Abdrücken durchgeführt wird, die ausgehend von den pro Typ sortierten Mitteilungen erzeugt werden, um eine Ansicht pro Typ zu erzeugen.

7. Überwachungsvorrichtung (100), die ausgebildet ist, um eine Vielzahl von Ausrüstungen in einem Kommunikationsnetz zu überwachen, die enthält:
- Einrichtungen (102) zum Empfang von Informationsmitteilungen, die ausgebildet sind, um Mitteilungen von einer Vielzahl von Ausrüstungen zu empfangen, wobei eine von einer Ausrüstung kommende Informationsmitteilung eine Vielzahl von Informationsfeldern enthält;
- Einrichtungen (104) zur Erzeugung mindestens eines Abdrucks, die ausgebildet sind, um eine Einheit von vorbestimmten Feldcodes aus einer empfangenen Mitteilung zu entnehmen, wobei die Einheit von entnommenen Codes einen Abdruck der Mitteilung formt;
- Einrichtungen (106) zur Zählung der Anzahl von Vorkommen eines Abdrucks, die ausgebildet sind, um die Anzahl von Vorkommen eines Abdrucks zu zählen;
- Einrichtungen (108) zur Mitteilung an mindestens eine Hauptüberwachungsvorrichtung mindestens eines Abdrucks und der gezählten Anzahl von Vorkommen für diesen Abdruck;
**dadurch gekennzeichnet, dass** sie außerdem Einrichtungen zur Bestimmung der Felder der Mitteilung enthält, die zu entnehmen sind, um den Abdruck abhängig von einem Ankunftstakt der Mitteilungen an der ersten Überwachungsvorrichtung zu formen.

8. Überwachungssystem (60), das ausgebildet ist, um eine Vielzahl von Ausrüstungen in einem Kommunikationsnetz zu überwachen, das enthält:
- mindestens eine Überwachungsvorrichtung (100) nach Anspruch 7;
- mindestens eine Hauptüberwachungsvorrichtung (10, 12), die Einrichtungen zum Empfang einer Mitteilung enthält, die mindestens einen Abdruck und eine Anzahl von Vorkommen für diesen Abdruck enthält.

9. Programm zur Überwachung einer Vielzahl von Ausrüstungen in einem Kommunikationsnetz, für eine Überwachungsvorrichtung (20, 22), das Programmanweisungen enthält, die dazu bestimmt sind, die Ausführung der Schritte des Verfahrens nach einem der Ansprüche 1 bis 6 zu steuern, wenn das Programm von der Überwachungsvorrichtung ausgeführt wird.

10. Aufzeichnungsträger, der von einer Überwachungsvorrichtung lesbar ist, auf dem das Programm nach Anspruch 9 aufgezeichnet ist.
